# EUROPEAN PATENT SPECIFICATION

(11) **EP 0 683 866 B1**
(45) Date of publication and mention of the grant of the patent: **14.08.1996**
(21) Application number: 94906264.0
(22) Date of filing: 04.02.1994
(51) Int. Cl.: F16D 7/00, F16D 7/08, B65G 47/26

(54) **TORQUE LIMITATION DEVICE**
DREHMOMENTBEGRENZUNGSVORRICHTUNG
DISPOSITIF LIMITEUR DE COUPLE

(30) Priority: 15.02.1993 GB 9302955; 30.10.1993 GB 9322443
(43) Date of publication of application: 29.11.1995
(73) Proprietor: POWERVEYOR PRODUCTS LIMITED, Gibraltar (GI)
(72) Inventor: Bartlam, Gregory Gordon, Hinckley, Leicestershire LE10 1UB (GB); James, Elliot Richard, Balsall Common, Coventry CV7 7GD (GB); James, Kirk Hamilton, Meriden, Coventry CV7 7NJ (GB)
(74) Representative: Parr, Ronald Edward R.E. Parr & Co.
(86) International application number: GB9400207
(87) International publication number: WO9418468

(56) References cited:
- WO-A-82/00183
- BE-A- 629 814
- DE-A- 2 226 272
- DE-C- 2 953 848
- GB-A- 2 061 461
- GB-A- 2 082 698
- US-A- 3 942 338
- US-A- 4 143 525
- US-A- 4 263 789
- US-A- 4 286 441

## Description

The invention relates to a torque limitation device or clutch as disclosed in the preamble of claim 1. A device of this kind is known from DE-C-29 53 848. In particular though not exclusively the invention relates to a torque limitation device that is suitable for use with a conveyor. The invention also relates to conveyors, especially roller conveyors, including the torque limitation device.

In using mechanical conveyors there is a need for separate, spaced articles on the conveyor to be allowed to accumulate in line in a predetermined zone, for example for subsequent division of the line or for other processing. Although the line of articles can readily be brought to a halt by the use, for example, of a mechanical stop, it is important to preclude the conveyor rollers from continuing to rotate relative to the bottoms of the stationary articles. Stopping the rollers by cutting the power to the conveyor is not a practicable course of action, largely because the conveyor needs to be kept moving so as to drive rollers (usually by chain and sprocket means) in other parts of the line.

The present invention now provides, in a first aspect, a torque limitation device which comprise the features of claim 1.

In a second aspect the invention provides a roller conveyor in which one or more of the rollers are provided with a torque limitation device according to the first aspect of the invention.

The invention is concerned, in particular, with a torque limitation device for roller conveyors driven by chain and sprocket wheel means, and it is with particular reference to such conveyors that the following description relates.

In a preferred form of the invention the force-transmitting member comprises one or more resilient rotatable elements accommodated in a cage or other carrier, the carrier being disposed between the driving and the driven surfaces for rotation about an axis of the carrier. As the rotatable elements there can be used, for example, balls (which can be, for example. of spherical or spheroidal shape) or rollers (for example of cylindrical or frusto-conical shape). Any convenient number of rotatable elements can be used, for example any number in the range 2 to 10, the number depending to some extent on the size of the carrier (where one is used) and on the torque limit required for the device. In general, the torque limit is greater the greater the number of balls or other rotatable elements. In order to provide for flexibility in use. it is convenient to use a carrier having apertures, recesses or other means to accommodate the rotatable elements in a number greater than the minimum number required. For example, the carrier can comprise a rotatable disc having formed therein. for example. 6 to 10 apertures in which are disposed. normally equi-angularly, the balls or other rotatable elements. which can be, for example 2, 3, 4 or 5 in number. If desired every one of the apertures can contain a rotatable element.

The rotatable elements are preferably disposed equiangularly with respect to each other; they are conveniently disposed at a common radial distance from the axis of rotation of the carrier.

The rotatable elements normally are ones having a substantial degree of resilience. The resilience of the ball or other rotatable member is preferably such that it is in a compressed, distorted state in its location between the driving surface and the driven surface. Thus, where the rotatable elements are spherical balls in their normal, relaxed state. they will assume a spheroidal shape when in the compressed state between the driving and driven surfaces.

The ball or other rotatable element is conveniently of a polyurethane elastomer having an appropriate resilience. Suitable materials are polyurethane elastomers having a Shore A hardness in the range from 80 to 95, for example in the range from 85 to 90.

A preferred form of carrier is a cylindrical plate having formed therein a plurality of apertures or recesses each to accommodate an element rotatable within its respective aperture or recess. The apertures (or recesses) are preferably disposed equi-angularly in the plate and preferably disposed at a common radial distance from the axis of rotation of the plate. In a preferred embodiment of the invention all of the elements are accommodated in apertures, rather than recesses, in the plate, whereby the elements are in contact both with the driving surface of the driving member and the driven surface of the driven member

The driven surface can be one having formed therein a plurality of recesses each sequentially to receive the rotatable elements as they move relative to the driven surface.

In normal operation the balls or other resilient members have two modes of operation. In the first, torque-transmitting, mode the resilient members are in a compressed state between the driving and driven members and do not move with respect to either. In the second mode the resilient members. still in a compressed state, roll against an adjacent surface of the driving and/or driven member. This rolling motion is normally without slipage.

The balls or other rotatable elements can be of any suitable material that provides a suitable resilience and/or coefficient of friction. Suitable materials, mentioned by way of example, are thermoplastic polyurethane elastomers, for instance those sold by BASF under the trade mark "Elastollan", especially those of the C series based on polyester. for example C90A and C74D. Physical properties of members of the Elastollan C series are as follows:

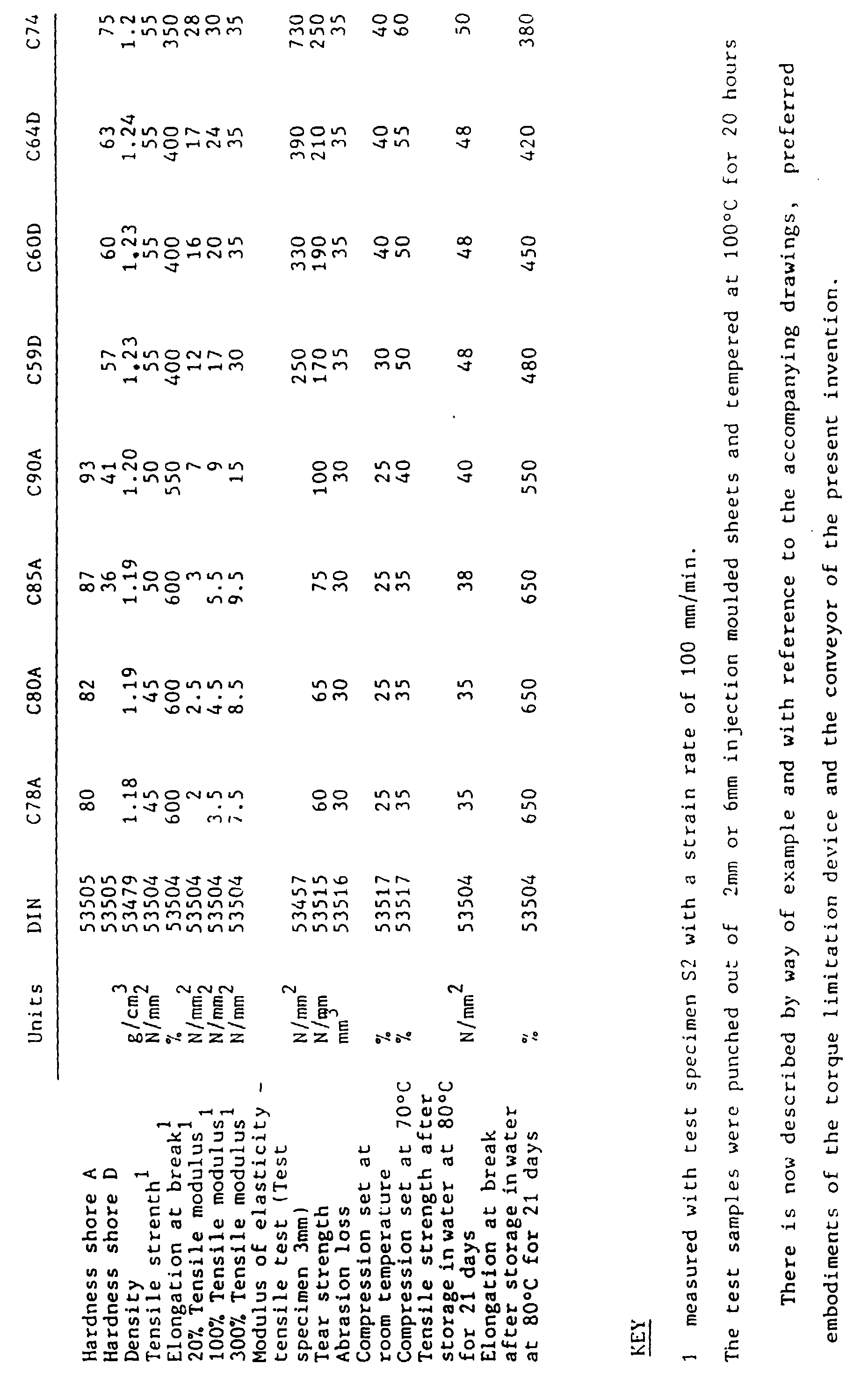

There are now described by way of example and with reference to the accompanying drawings, preferred embodiments of torque limitation device and conveyor of the present invention.

In the drawings:
FIG. 1 is an end elevation, partly in section of a conveyor including a torque limitation device of the first aspect of the invention;
FIG. 2 is a median cross-section, on an enlarged scale, of that portion of the conveyor which includes the torque limitation device of FIG. 1;
FIG. 3 is a cross-section of the line A-A of FIG. 1;
FIG. 4 is a median cross-section of a torque limitation device of a second embodiment of the invention;
FIG. 5 is a median cross-section of a torque limitation device of a third embodiment of the invention; and
FIG. 6 is a median cross-section of a torque limitation device of a fourth embodiment of the invention.

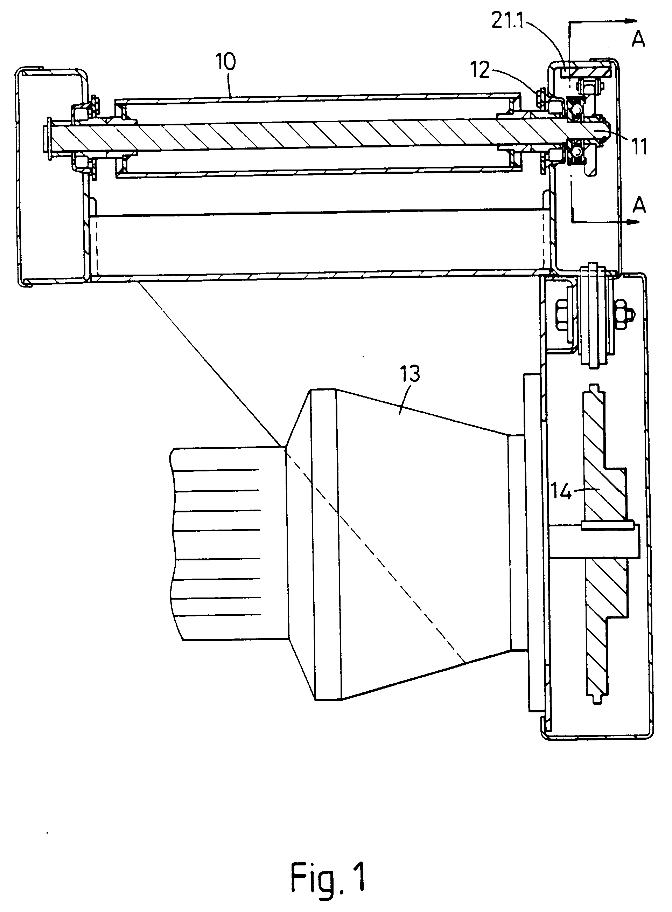

With reference to Figure 1, the conveyor includes a plurality of parallel cylindrical rollers (10), the respective rollers being fixedly secured to hexagonal axles (11) whose end portions are journalled in bearings (12) having hexagonal adaptors and retainers. The conveyor is driven bv a motor (13) through a drive sprocket wheel (14) and a chain (15) which engages sprocket wheels (16) each rotatably mounted in association with a lubricating bush (17) and a thrust washer (18). This sprocket wheel assembly is subjected, as described below, to inwardly directed axial compressive force by means of a circlet clip (19) which engages a circumferential groove (20) in the end portion of axle (11). The mechanism is enclosed in housing (21) having secured thereto a polyethylene chain guide (21.1).

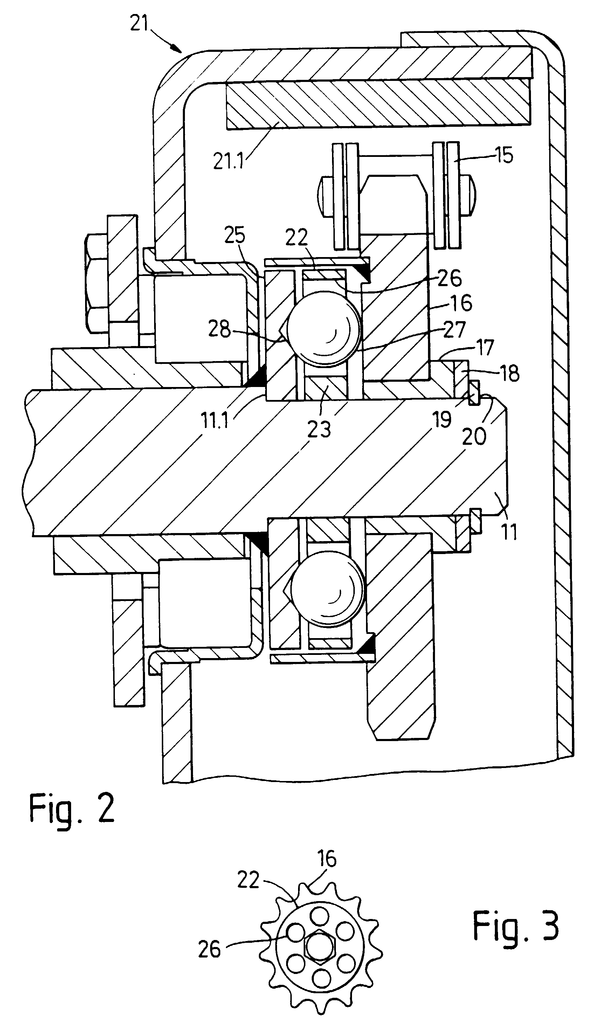

With particular reference to Fig. 2, the end portion of axle (11) is of a reduced diameter defining a circumferential shoulder (11.1) against which is secured by welding a circular, annular reaction plate (25) disposed parallel to, and spaced part from, sprocket wheel (16). In the space between the reaction plate and the sprocket wheel (16) there is disposed a cage in the form of a circular, annular disc (22) rotatably mounted on axle (11) and having six circular apertures (26) disposed equi-angularly and at a common radial distance from the centre of the disc, and each aperture containing a like torque-transmitting polyurethane rubber ball (27) of high resilience. The balls have a common diameter which is greater than the thickness of disc (22) and thus the balls protrude from each face of the disc.

The balls used were of a polyurethane elastomer having the following properties:
- Hardness :: 85-90 Shore A
- Density :: 1250Kg/CuM
- Specific Gravity :: 1.26

Reaction plate (25) (optionally) has formed therein six shallow conical recesses (28) disposed equi-angularly and at a common radial distance from the centre of plate (25) so that their locations correspond to the locations of balls (27) whereby all six recesses can simultaneously releasably engage all six balls.

A mode of operation of the torque limiting device described above with reference to the accompanying drawings can be as follows:

When the conveyor is in its normal operating mode, that is, being driven by the motor (13) through the drive sprocket wheel (14), chain (15) and driven sprocket wheels (16), torque is transmitted from the sprocket wheels (16) through the balls (27) to the reaction plate (25), which causes the axle (11) and roller (10) to rotate at the same angular velocity as the sprocket wheel (16), the balls (27), in a compressed state, being stationary with respect to the driving surface of sprocket wheel (16) and the driven surface of reaction plate (25). In this mode a line of articles carried by the conveyor moves forward at a constant linear velocity. If that flow of article is interrupted, for example by means of a mechanical stop, the articles accumulate on the conveyor and a torque is set up in the rollers supporting the articles. this torque being transmitted through axle (11) to reaction plate (25). When the torque limit of the torque limitation device is reached the balls begin to rotate while remaining compressed and in contact both with the driving surface and with the driven surface: and the drive between sprocket wheel (16) and reaction plate (25) is disengaged thereby allowing the rollers (10) supporting the articles to come to rest.

When the mechanical stop or other braking means is removed frictional force between the balls (27) and the driving and driven surfaces is re-established, the balls come to rest between the surfaces and transmission of power from the sprocket wheels (16) to the reaction plate (25) is resumed.

A further advantage provided by the present invention is in starting up the conveyor, in which circumstance the torque limitation device acts as a clutch and smooths the transmission of power from the sprocket wheel (16) to reaction plate (25).

Where, as is illustrated in Figure 2 of the accompanying drawings, the driven surface has formed therein a plurality of recesses (28) (which can, for example, be bounded by a spherical or conical surface or can be in the form of grooves radially disposed in the driven surface), the balls or other rotatable elements, when in engagement with the respective recesses, can be either in a relaxed, uncompressed state or in a distorted, compressed state. In either event, when the balls move from a first recess to the next adjacent recess they assume a distorted, compressed state between the first recess and said adjacent recess.

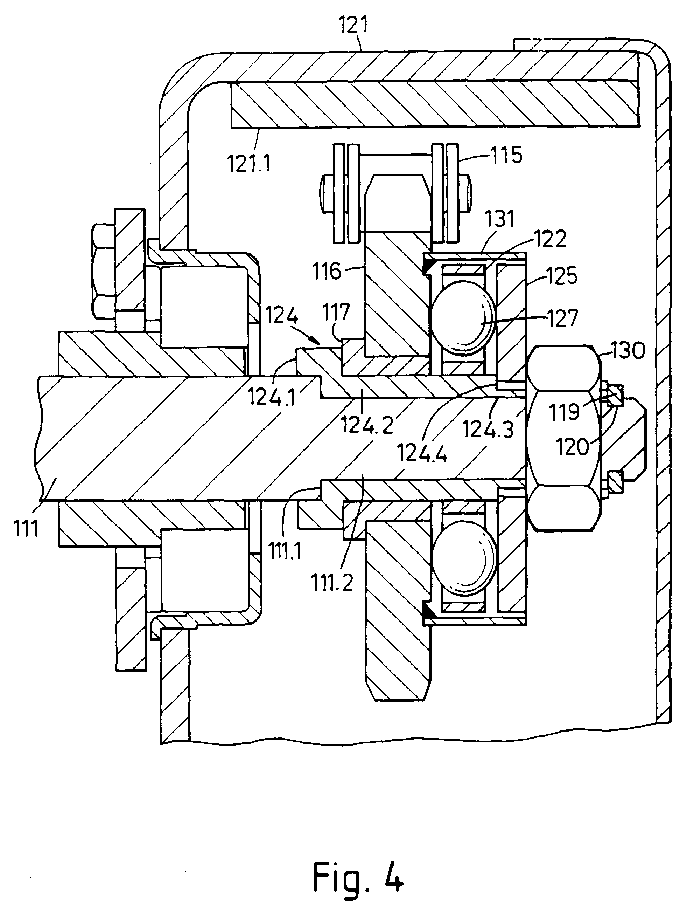

With reference to Figure 4, the torque limitation device is mounted outboard of the sprocket wheel thereby facilitating ready positioning and removal of the device. The conveyor includes a plurality of parallel cylindrical rollers (not shown), the respective rollers being fixedly secured to axles one of which (111) is shown. The conveyor is driven by a motor through a drive sprocket wheel (not shown) and a chain (115) which engages sprocket wheels one of which (116) is shown.

Axle (111) has an integral cylindrical axle extension portion (111.2) which together with axle (111) defines an annular shoulder (111.1). An annular hub (124), fixedly mounted on axle extension (111.2), comprises a flanged head portion (124.1) a shank portion (124.2) and a reduced diameter tail portion (124.3), the tail portion being externally screw-threaded. and the shank and tail portions defining an annular shoulder (124.4). The outer end of tail portion (124.3) stops short of the outer end of axle extension (111.2). The flanged head portion (124.1) mates with the axle shoulder (124.1). On the shank portion (124.2) are rotatably mounted (on lubrication bushes) the sprocket (116) and an annular cage (122); the latter contains, in a plurality of spaced apertures, a plurality of resilient balls (127). The cage and/or balls can be, for example, similar to those described with reference to Figures 1 to 3.

A reaction plate or other reaction member (125) has an internally screw-threaded, centrally located aperture by means of which it is mounted on the externally screw-threaded hub tail portion (124.3), the reaction member being screwed up the hub tail portion so that its inner face firmly abuts the hub shoulder (124.4). The member (125) is held in place by a retaining nut (130), and hub (124) is held in place on the axle extension by a circlet clip (119) which engages a circumferential groove (120). Reaction plate (125) has no recesses corresponding to recesses (28) of Figure 2; and spherical. resilient balls (127) are shown in a spheroidal shape assumed under the axial compressive force applied to them.

A cylindrical oil shield (131), secured to sprocket (116) by welding, is disposed coaxially with respect to the cage (122) to prevent accidental ingress of oil.

The dimensions and disposition of the various component parts are such that the balls (127) are held in compression between sprocket (116) and reaction member (125). The degree of compression is such that the diameter of the balls is about one and a half mm. less in this compressed state than in their uncompressed state.

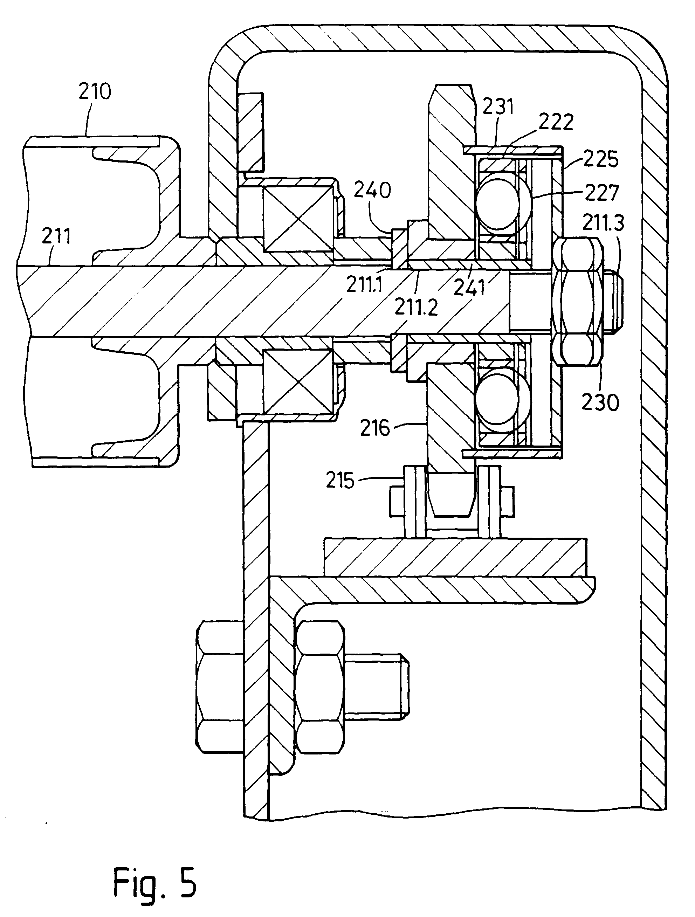

With reference to Figure 5, the conveyor includes a plurality of parallel cylindrical rollers (210), the respective rollers being fixedly secured to axles one of which (211) is shown. The conveyor is driven by a motor through a drive sprocket wheel (not shown) and a chain (215) which engages sprocket wheels one of which (216) is shown.

Axle (211) has an integral cylindrical axle extension (211.2), which together with axle (211) defines an annular shoulder (211.1), and an outer screw-threaded end portion (211.3), A washer (240) mates with the annular shoulder. A spacer sleeve (241) is slidably located on the axle extension (211.2), and on the sleeve are rotatably mounted (on lubrication bushes) the sprocket (216) and an annular cage (222); the latter contains, in a plurality of spaced apertures, a plurality of resilient balls (227). The cage and/or balls can be, for example, similar to those described with reference to Figures 1 to 3.

A reaction plate or other reaction member (225) has an internally screw-threaded. centrally located aperture by means of which it is mounted on the screw-threaded axle end portion (211.3), the reaction member being screwed up the axle end portion so that its inner face firmly abuts the spacer sleeve. The member (225) is held in place by a retaining nut (230).

The dimensions and disposition of the various component parts are such that the balls (227) are held in compression between sprocket (216) and reaction member (225). The degree of compression is such that the diameter of the balls is about one and a half mm. less in the compressed state than in their uncompressed state.

The resilient balls (227) are shown in two forms corresponding to balls of two different diameters under compression in each case. Similarly, reaction plate (225) and nut (230) are shown in two dispositions corresponding, respectively, to the two different ball diameters. Spacer sleeve (241) is shown in two different lengths, the shorter permitting reaction member (225) to be disposed nearer sprocket (216) (and thereby accommodate the smaller balls) and the longer being sized in accordance with the diameter of the larger balls.

A cylindrical oil shield (231), secured to sprocket (226), is disposed co-axially with respect to cage (222) to prevent accidental ingress of oil.

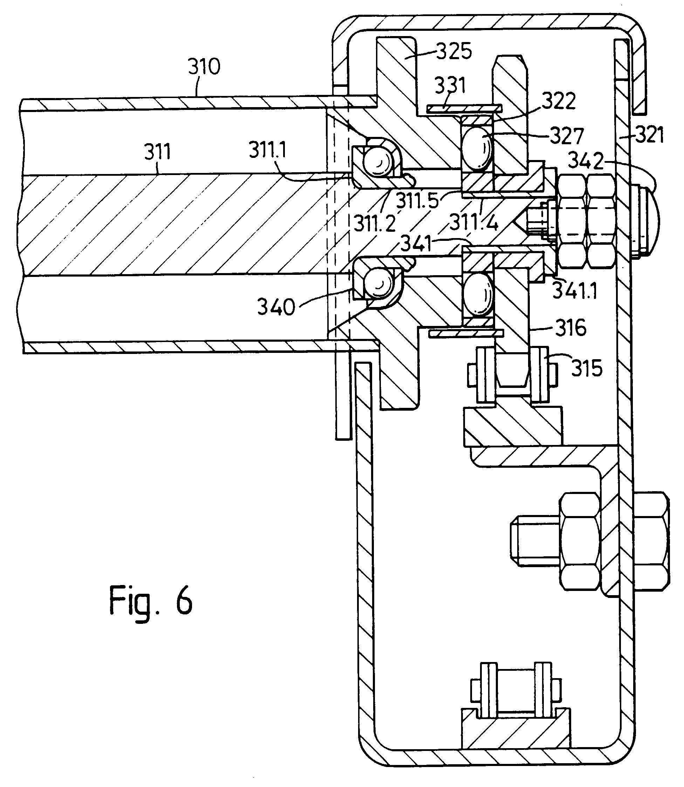

In the embodiment of Figure 6 the axles are static, being secured to the conveyor frame, and each supports a roller rotatably mounted thereon.

The conveyor includes a plurality of parallel cylindrical rollers (310) and is driven by a motor through a drive sprocket wheel (not shown) and a chain (315) which engages sprocket wheels one of which (316) is shown. Axle (311) has a first integral cylindrical axle extension (311.2), which together with axle (311) defines a first annular shoulder (311.1) and a second integral cylindrical axle extension (311.4), which together with said first axle extension, defines a second annular shoulder (311.5). An angular contact bearing (340) is disposed adjacent annular shoulder (311.1). A spacer sleeve (341) having a radially outwardly directed flange (341.1), is slidably located on the axle second extension (311.4), and on the sleeve are rotatably mounted (on lubrication bushes) the sprocket (316) and an annular cage (322); the latter contains, in a plurality of spaced apertures, a plurality of resilient balls (327). The cage and/or balls can be, for example, similar to those described above with reference to Figures I to 3. A reaction member (325) is rotatably mounted on bearing (340) and is secured to the adjacent end of roller (310). Axle (311) is fixed to the housing (321) by means of a bolt (342) and two spacer nuts, the inner one of which bears against flange (341.1) and thereby urges spacer sleeve (341) against the axle second shoulder (311.5).

The dimensions and disposition of the various component parts are such that the balls (327) are held in compression between sprocket (316) and reaction member (325). The degree of compression is such that the diameter of the balls is about one and a half mm. less in this compressed state than in their uncompressed state.

A cylindrical oil shield (331), secured to sprocket (326), is disposed co-axially with respect to cage (322) to prevent accidental ingress of oil.

The balls used in all of the embodiments described with reference to the drawings were spherical balls and composed of Elastollan C90A (or alternatively Elastollan C74D).

The size and number of balls used in the devices described above with reference to Figures 4, 5 and 6 are shown in the following Table. It will be seen that Figures 5 and 6 each relate to two alternative ball arrangements, the numbers of balls in each case being an even number as indicated by those Figures. Further, the embodiment shown in Figure 4 has been modified so that the annular cage (122) accommodates an odd number of balls, for example 7.

| Figure No. | Diameter of Balls (mm) | Number of Balls |
|---|---|---|
| 7 | 8 | 10 |
| | 12 | 6 |
| 5 | 8 | 8 |
| | 9.4 | 6 |
| 6 | 8 | 8 |
| | 9.4 | 6 |

The pitch of the chain used in Figure 4 was 5/8 inch; the pitch of the chain used in Figures 5 and 5 was 1/2 inch.

As stated above, the degree of compression of the balls in the embodiments shown in Figures 4, 5 and 6 can be one and a half mm. The term "degree of compression" in this context indicates the difference between the diameter of the balls in their uncompressed state and the distance between the driving surface (for example the sprockets shown in the drawings) and the driven surface (for example the reaction plates shown in the drawings). Degrees of compression other than one and a half mm can, if desired be used: the greater the degree of compression the greater is the torque limit that can be obtained. Suitable alternative degrees of compression are in the range 0.5mm to 4mm, for example, 1, 2 or 2.5mm.

The degree of compression can be adjusted, for example, by choosing balls or other resilient rotatable elements of a particular size; an increase in the diameter of resilient balls, for instance, results in a greater degree of compression and, in consequence. an increase in the torque limit of the device. An alternative method of adjusting the degree of compression is to adjust the distance between the driving surface of the driving member and the driven surface of the driven member. By way of example, in the embodiment shown in Figure 6 said distance can be adjusted by choosing a particular axial length of spacer sleeve (341), for example by choosing a particular thickness of spacer sleeve flange (341.1). By means of this alternative method the degree of compression and therefore the torque limit can be adjusted without the need to replace the resilient balls (or other resilient rotatable elements).

With further reference to Figure 6, the spacer sleeve (341) including spacer sleeve flange (341.1) can, if desired, be replaced by two separate members: a tubular sleeve and an annular plate corresponding respectively to the shank of sleeve (341) and the flange (341.1) of sleeve (341).

## Claims

1. A torque limitation device which comprises:
a driving member (16, 116, 216, 316) having a driving surface;
a driven member (25, 125, 225, 325) having a driven surface; and
disposed between said driving surface and said driven surface and in frictional contact with them a resilient force-transmitting means (27, 127, 227, 327) comprising one or more resilient rotatable elements carried by a carrier (22, 122, 222, 322), said carrier being disposed between the driving and the driven surfaces for rotation about an axis of the carrier, said force-transmitting means being capable in a first mode of transmitting force from said driving member to said driven member and, in a second mode, of ceasing to transmit the force and to rotate while in contact with said driving surface and said driven surface;
characterised in that said resilient elements are resilient balls (27,127,227,327) and the carrier (22,122,222,322) comprises a plate having formed therein a plurality of apertures or recesses (26) each to accommodate a resilient ball therein so as to be rotatable within its respective aperture or recess.

2. A torque limitation device according to Claim 1,
wherein said apertures or recesses are disposed equi-angularly in the plate.

3. A torque limitation device according to Claim 1 or 2, wherein all of the balls are accommodated in apertures in said plate and all of the balls are in contact with said driving surface and with said driven surface.

4. A torque limitation device according to Claim 1, 2 or 3, wherein the apertures are circular.

5. A torque limitation device according to any of the preceding claims, wherein, in use, the balls are compressed between said driving member and said driven member.

6. A torque limitation device according to Claim 5, wherein the balls are spherical balls and, in use, they are compressed to the shape of a spheroid.

7. A torque limitation device according to Claim 6, wherein the major axis of the spheroid is disposed diametrically with respect to the respective circular aperture and the minor axis is disposed transversely to the respective circular aperture.

8. A torque limitation device according to any of the preceding claims, wherein the driven surface has formed therein a plurality of like recesses (28) disposed equi-angularly in said surface and each sequentially to receive the balls as they move relative to the driven surface.

9. A torque limitation device according to any of the preceding claims, wherein the driving member is a sprocket wheel (16, 116 216, 316) and the driven member is a reaction plate (25, 125, 225, 325).

10. An accumulator roller conveyor in which one or more of the rollers are provided with a torque limitation device as claimed in any of the preceding claims.

11. An accumulator roller conveyor according to Claim 10, having a plurality of parallel rollers, said driving member is comprises by, or is secured to, a chain-driven sprocket wheel and said driven member is a member comprised by, or secured to, one of the rollers.

## Patentansprüche

1. Drehbegrenzungsvorrichtung mit:
einem antreibenden Glied (16, 116, 216, 316) mit einer antreibenden Oberfläche;
einem angetriebenen Glied (25, 125, 225, 325) mit einer angetriebenen Oberfläche;
und
angeordnet zwischen der antreibenden Oberfläche und der angetriebenen Oberfläche und in Reibberührung mit diesen einer elastischen Kraftübertragungseinrichtung (27, 127, 227, 327), welche eine oder mehrere elastische drehbare Elemente aufweist, welche von einem Träger (22, 122, 222, 322) getragen sind, wobei der Träger zwischen der antreibenden und der angetriebenen Oberfläche zur Rotation um eine Achse des Trägers angeordnet ist, die Kraftübertragungseinrichtung in der Lage ist, in einem ersten Übertragungsmodus Kraft von dem antreibenden Glied auf das angetriebene Glied zu übertragen, und in einem zweiten Modus die Kraftübertragung und das Rotieren zu unterbrechen, während sie in Berührung mit der antreibenden Oberfläche und der angetriebenen Oberfläche steht;
**dadurch gekennzeichnet**, daß die elastischen Elemente elastischer Kugeln (27, 127, 227, 327 sind und der Träger (22, 122, 222, 322) eine Platte aufweist mit einer Vielzahl darin ausgebildeter Öffnungen oder Ausnehmungen (26), welche dazu bestimmt sind, in sich eine elastische Kugel so aufzunehmen, daß sie in ihrer jeweiligen Öffnung oder Ausnehmung rotierbar ist.

2. Drehbegrenzungsvorrichtung nach Anspruch 1, bei welcher die Öffnungen oder Ausnehmungen in gleichen Winkeln in der Platte angeordnet sind.

3. Drehbegrenzungsvorrichtung nach Anspruch 1 oder 2, bei welcher alle Kugeln in Öffnungen in der Platte aufgenommen sind und alle in Berührung mit der antreibenden Oberfläche und mit der angetriebenen Oberfläche stehen.

4. Drehbegrenzungsvorrichtung nach Anspruch 1, 2 oder 3, bei welcher die Öffnungen kreisförmig sind.

5. Drehbegrenzungsvorrichtung nach einem der vorhergehenden Ansprüche, bei welcher, im Betrieb, die Kugeln zwischen dem antreibenden Glied und dem angetriebenen Glied zusammengedrückt sind.

6. Drehbegrenzungsvorrichtung nach Anspruch 5, bei welcher die Kugeln sphärische Kugeln sind und, im Betrieb, in die Gestalt eines Sphäroids zusammengedrückt sind.

7. Drehbegrenzungsvorrichtung nach Anspruch 6, bei welcher die Hauptachse des Sphäroids diametral zu der jeweiligen Kreisöffnung und die kürzere Achse quer zu der jeweiligen Kreisöffnung angeordnet sind.

8. Drehbegrenzungsvorrichtung nach einem der vorhergehenden Ansprüche, bei welcher die antreibende Oberfläche eine Vielzahl von gleichen Ausnehmungen (28) ausgebildet enthält, welche unter gleichen Winkeln in der Oberfläche angeordnet sind und jeweils aufeinanderfolgend die Kugeln aufnehmen, wenn diese sich relativ zu der angetriebenen Oberfläche bewegen.

9. Drehbegrenzungsvorrichtung nach einem der vorhergehenden Ansprüche, bei welcher das antreibende Glied ein Zahnrad (16, 116, 216, 316) und das angetriebene Glied eine Reaktionsplatte (25, 125, 225, 325) ist.

10. Akkumulatorrollenförderer, bei welchem eine oder mehrere Rolle(n) mit einer Drehbegrenzungsvorrichtung nach einem der vorhergehenden Ansprüche ausgestattet ist (sind).

11. Akkumulatorrollenförderer nach Anspruch 10, mit einer Vielzahl paralleler Rollen, wobei das antreibende Glied von einem kettengetriebenen Zahnrad umfaßt oder an diesem befestigt ist und das angetriebene Glied von einer der Rollen umfaßt bzw. an einer der Rollen befestigt ist.

## Revendications

1. Dispositif limiteur de couple, qui comprend:
un organe menant (16, 116, 216, 316) présentant une surface menante;
un organe mené (25, 125, 225, 325) présentant une surface menée; et,
disposés entre ladite surface menante et ladite surface menée et en contact de friction avec elles, des moyens élastiques de transmission de force (27, 127, 227, 327), comprenant un ou plusieurs éléments élastiques pouvant tourner portés par un support (22, 122, 222, 322), ledit support étant disposé entre les surfaces menante et menée libre en rotation autour d'un axe du support, lesdits moyens de transmission de force étant aptes, dans un premier mode, à transmettre une force dudit organe menant audit organe mené et, dans un second mode, à cesser de transmettre la force et à tourner tout en étant en contact avec ladite surface menante et ladite surface menée;
caractérisé en ce que lesdits éléments élastiques sont des billes élastiques (27, 127, 227, 327) et le support (22, 122, 222, 322) comprend une plaque dans laquelle sont formés plusieurs ouvertures ou évidements (26), destinés à recevoir chacun une bille élastique à l'intérieur, de telle façon qu'elle puisse tourner dans son ouverture respective ou son évidement respectif.

2. Dispositif limiteur de couple selon la revendication 1, dans lequel lesdites ouvertures ou lesdits évidements sont disposée à intervalles angulaires égaux dans la plaque.

3. Dispositif limiteur de couple selon la revendication 1 ou 2, dans lequel toutes les billes sont reçues dans des ouvertures ménagées dans ladite plaque et toutes les billes sont en contact avec ladite surface menante et avec ladite surface menée.

4. Dispositif limiteur de couple selon la revendication 1, 2 ou 3, dans lequel les ouvertures sont circulaires.

5. Dispositif limiteur de couple selon l'une quelconque des revendications précédentes, dans lequel, en service, les billes sont comprimées entre ledit organe menant et ledit organe mené.

6. Dispositif limiteur de couple selon la revendication 5, dans lequel les billes sont des billes sphériques et, en service, elles sont comprimées en prenant la forme d'un sphéroïde.

7. Dispositif limiteur de couple selon la revendication 6, dans lequel le grand axe du sphéroïde est disposé diamétralement par rapport à l'ouverture circulaire respective et le petit axe est disposé transversalement à l'ouverture circulaire respective.

8. Dispositif limiteur de couple selon l'une quelconque des revendications précédentes, dans lequel, dans la surface menée, sont formés plusieurs évidements identiques (28) disposés à intervalles angulaires égaux dans ladite surface et destinés chacun à recevoir successivement les billes à mesure qu'elles se déplacent par rapport à la surface menée.

9. Dispositif limiteur de couple selon l'une quelconque des revendications précédentes, dans lequel l'organe menant est une roue dentée (16, 116, 216, 316) et l'organe mené est une plaque de réaction (25, 125, 225, 325).

10. Transporteur accumulateur à rouleaux, dans lequel un ou plusieurs des rouleaux sont munie d'un dispositif limiteur de couple tel que défini dans l'une quelconque des revendications précédentes.

11. Transporteur accumulateur à rouleaux selon la revendication 10, comportant une multiplicité de rouleaux parallèles, ledit organe menant étant constitué par, ou étant fixé à, une roue dentée entraînée par une chaîne, et ledit organe mené est un organe constitué par, ou fixé à, l'un des rouleaux.
